# EUROPEAN PATENT SPECIFICATION

(11) **EP 3 861 394 B1**
(45) Date of publication and mention of the grant of the patent: **22.11.2023**
(21) Application number: 19794293.1
(22) Date of filing: 03.10.2019
(51) Int. Cl.: G02B 6/44

(54) **CABINETS FOR FIBER OPTIC CABLE AND DUCT MANAGEMENT**
SCHRÄNKE FÜR FASEROPTISCHE KABEL UND KANALVERWALTUNG
ARMOIRES POUR CÂBLE À FIBRES OPTIQUES ET GESTION DE CONDUITS

(30) Priority: 04.10.2018 US 201862741247 P; 28.11.2018 US 201862772138 P
(43) Date of publication of application: 11.08.2021
(73) Proprietor: Corning Research & Development Corporation, Corning, New York 14831 (US)
(72) Inventor: GAJEK, Max, 93-590 Lodz (PL)
(74) Representative: Elkington and Fife LLP
(86) International application number: PCT/US2019/054432
(87) International publication number: WO 2020/072736

(56) References cited:
- EP-A1- 2 148 231
- EP-A1- 2 661 092
- DE-A1-102011 111 399
- DE-A1-102016 009 977

## Description

### CROSS-REFERENCE TO RELATED APPLICATIONS

This application claims the benefit of priority under 35 U.S.C. § 119 of U.S. Provisional Application Serial No. 62/772138 filed on November 28, 2018, and U.S. Provisional Application Serial No. 62/741247 filed on October 4, 2018.

### BACKGROUND

The present disclosure generally relates to cabinets for fiber optic cable and duct management, having fiber optic duct-cable management systems, and methods of handling ducts and cables inside of fiber optic cable cabinets.

Current solutions that manage fiber optic cables use hose clamps to strain relieve ducts into which cables are blown. Bare buffer tubes are organized and mounted in plastic organizational elements on a hinged door, after which tubes are introduced into columns containing splice trays. Disclosed herein are different approaches to cable mounting and organizing with a number of improvements. The improvements disclosed herein further aim to increase the number of cables that can be mounted inside cabinets, and thereby ease workloads for operators.

EP 2 661 092 A1 discloses a cabinet for fiber optic cable management, comprising an outer cabinet body, an inner cabinet body disposed within the outer cabinet body and a duct-cable management system defined in a cavity of the cabinet, the duct-cable management system including a strain relief assembly.

### SUMMARY

Disclosed herein are cabinets for fiber optic cable and duct management, including fiber optic cable and duct management systems, and methods of handling ducts and cables inside of fiber optic cable cabinets. Accordingly, embodiments disclosed herein allow for easier duct mounting and positioning of ducts in grooves that provide strain relief. Moreover, the embodiments disclosed herein provide for a tool-less, lower-force operation compared to typical operations that require the use of tools such as screwdrivers for hose clamp adjustment to strain relieve ducts. The embodiments disclosed herein can also withstand much higher pull forces compared to hose clamps.

In accordance with one aspect, the present disclosure is directed toward a cabinet for fiber optic cable management, including an outer cabinet body, an inner cabinet body disposed at least partially within the outer cabinet body; and a duct-cable management system, defined in a cavity of the cabinet, including a strain relief assembly having at least two pairs of alignment elements, an alignment wall extending horizontally between each pair of alignment elements, wherein the alignment wall couples the respective alignment element pair, wherein each alignment element has a plurality of strain relieving grooves, and wherein at least one strain relieving groove is configured to cut into a duct and provide strain relief when the duct is pushed into the at least one strain relieving groove.

### BRIEF DESCRIPTION OF THE DRAWINGS

FIG. 1 is a front perspective view of a fiber optic cabinet in accordance with embodiments disclosed herein.
FIG. 2 is an enlarged front perspective view of the cabinet shown in FIG. 1.
FIG. 3 is an enlarged front perspective view of the cabinet shown in FIG. 2 with a duct and cable elements positioned within the cabinet in accordance with embodiments disclosed herein.
FIG. 4 is an enlarged front perspective view of the cabinet shown in FIG. 2 with duct and cable elements positioned within the cabinet in accordance with embodiments disclosed herein.
FIG. 5 is a front perspective view of a cabinet with a plurality of ducts positioned within the cabinet in accordance with embodiments disclosed herein.
FIG. 6 is an enlarged front perspective view of a strain relief assembly with a duct and cable elements positioned within the cabinet in accordance with embodiments disclosed herein.
FIG. 7 is a perspective view of an alternative cabinet in accordance with embodiments disclosed herein.
FIG. 8 is a perspective view of another alternative cabinet, including an internal splicing door, in accordance with embodiments disclosed herein.
FIG. 9 is an enlarged partial perspective view of the internal splicing door, shown in FIG. 8.

It is to be understood that both the foregoing general description and the following detailed description are merely exemplary and intended to provide an overview or framework to understanding the nature and character of the claims. The accompanying drawings are included to provide a further understanding, and are incorporated in and constitute a part of this specification. The drawings illustrate one or more embodiments, and together with the description explain the principles and operation of the various embodiments.

### DETAILED DESCRIPTION

In the following detailed description, reference is made to the accompanying drawings, which form a part hereof. In the drawings, similar symbols may be used to identify similar components, unless context dictates otherwise.

Moreover, the illustrative embodiments described in the detailed description, drawings, and claims are not meant to be limiting. Other embodiments may be utilized, and other changes may be made, without departing from the scope of the subject matter presented herein.

Also, it will be readily understood that the aspects of the present disclosure, as generally described herein, and illustrated in the various accompanying figures, can be arranged, substituted, combined, separated, and designed in a wide variety of different configurations, all of which are explicitly contemplated herein. It will be understood that when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being, for example, "directly on", "directly attached" to, "directly connected" to, "directly coupled" with or "directly contacting" another element, there are no intervening elements present.

It will be further understood that, although the terms "first", "second", etc. may be used herein to describe various elements, components, etc., these elements, components, etc. should not be limited by these terms. These terms are only used to distinguish one element, component, etc. from another element, component, etc. Thus, a "first" element or component discussed below could also be termed a "second" element or component without departing from the teachings of the present invention. In addition, the sequence of operations (or steps) is not limited to the order presented in the claims unless specifically indicated otherwise.

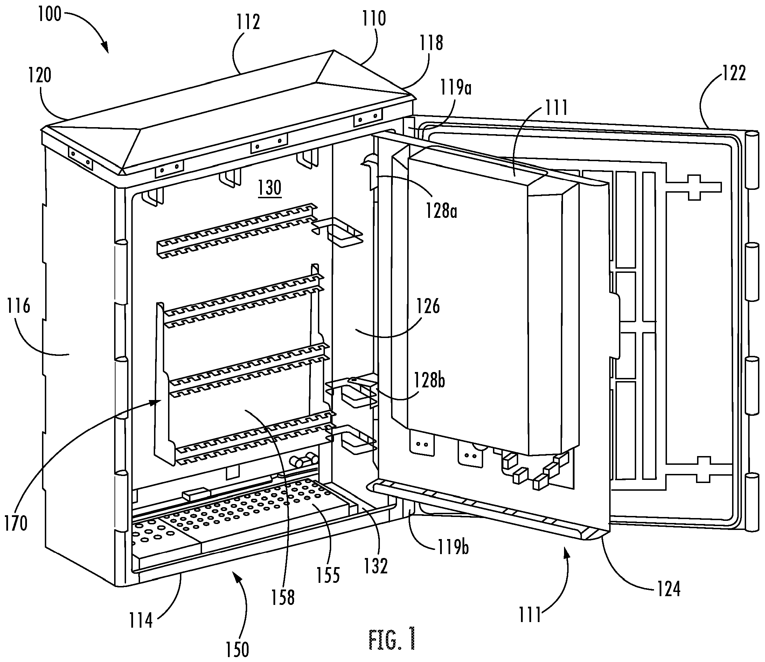

FIG. 1 is a perspective view of a cabinet 100, including an outer cabinet body 110 and an inner cabinet body 111. The outer cabinet body 110 includes an external top 112, which is preferably removable, a bottom external wall 114, a first external side wall 116, a second external side wall 118, a rear external wall 120, and an exterior door 122. The exterior door 122 is coupled to the second external side wall 118 via hinges 119a, 119b. Various connection elements (e.g. screws and rivets) are used to couple the respective elements of the outer cabinet body 110.

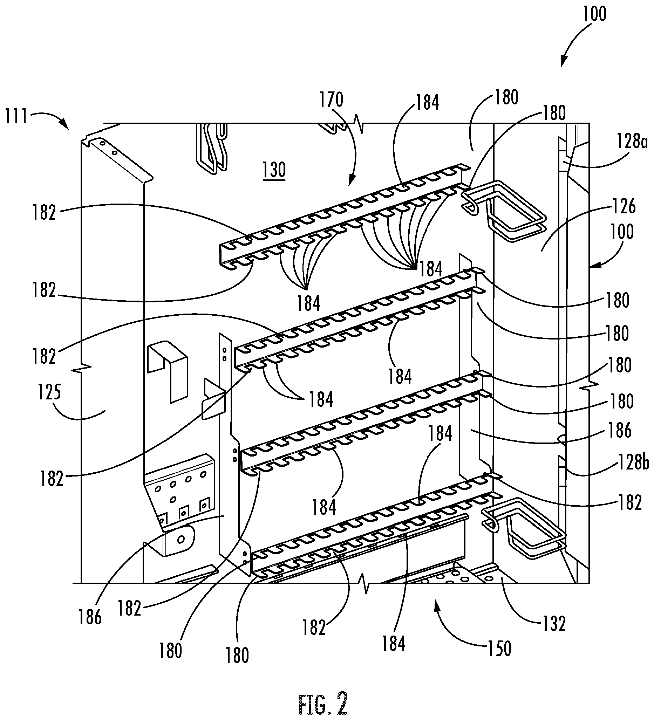

The inner cabinet body 111 includes an internal door 124, a first internal sidewall 125 (FIG. 2), a second internal sidewall 126, a plurality of hinges 128, a back internal wall 130, and a bottom internal wall 132. The plurality of hinges 128 includes at least first and second internal hinges 128a, 128b which couple the second internal sidewall 126 to the internal door 124. The inner cabinet body 111 is configured such that a cavity 158 is defined within the cabinet 100.

Coupled to the inner cabinet body 111 is a duct-cable management system 150. The system 150 includes a base plate 152, positioned above the bottom internal wall 132, and a strain relief assembly 170, as will be further described. The base plate 152 has a plurality of apertures 154, preferably in a matrix pattern 155 such that one or more ducts can be routed through the base plate 152 and positioned within a portion of the strain relief assembly 170.

The inner cabinet body 111 also includes upper cable/tube guides and side cable/tube guides that facilitate management of cables/tubes in the cabinet, particularly after positioning in the duct-cable management system 150. In this embodiment, three upper cable/tube guides are coupled to the back internal wall 130 above the duct-cable management system 150. In addition, three side cable/tube guides are coupled to the second internal sidewall 126. The number of cable/tube guides should not be construed as limiting, and fewer or additional guides can be positioned within the cabinet 100.

The strain relief assembly 170 includes four pair of alignment elements 180. An alignment wall 185 extends horizontally between the alignment elements and couples each respective alignment element pair. Each alignment element 180 has a plurality of strain relieving grooves 182 positioned between alignment extensions 184.

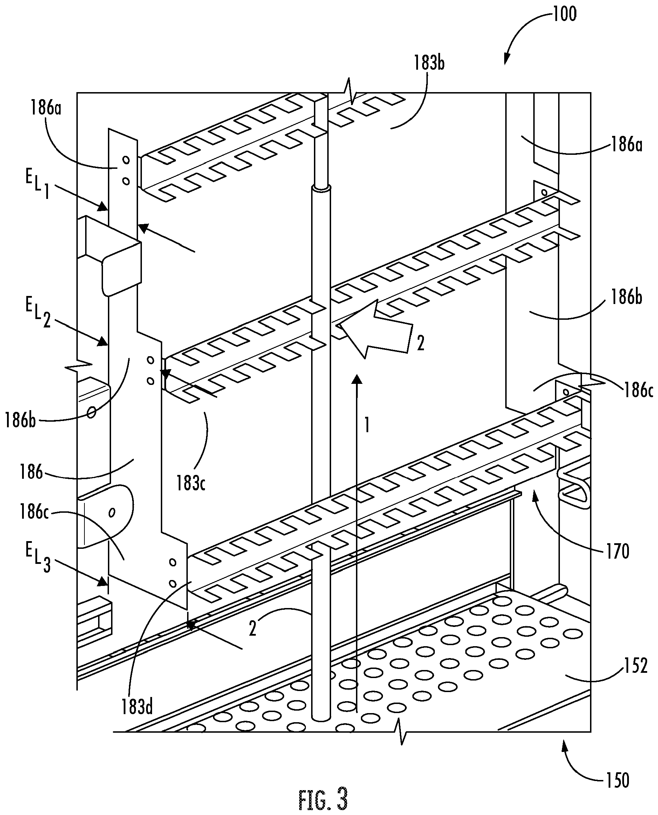

The strain relief assembly 170 also preferably includes two end plates 186 positioned a distance away from each end of the alignment elements 180. Each end plate 186 is configured to have multiple sections that extend outwardly in a staggered pattern with different extension lengths E_{L} (FIG. 3). In the exemplary embodiment, particularly shown in FIGs. 1-3, each end plate has three extensions lengths, E_{L1}, E_{L2}, E_{L3}. Preferably a top section 186a has a shorter extension length compared to the middle section 186b, and the middle section 186b has a shorter extension length compared to the bottom section 186c.

The strain relief assembly 170 is configured to accommodate about 60 ducts, with each duct having an outer diameter of about 12 mm. The assembly configuration is further configured to lower overall cabinet manufacturing cost and assembly time. In contrast, previously known solutions generally require installation of about 60 screws and 8 rivets. The system 150 preferably includes about 24 rivets to assemble the entire system. Accordingly, the assembly can be performed by one operator in a manner of minutes.

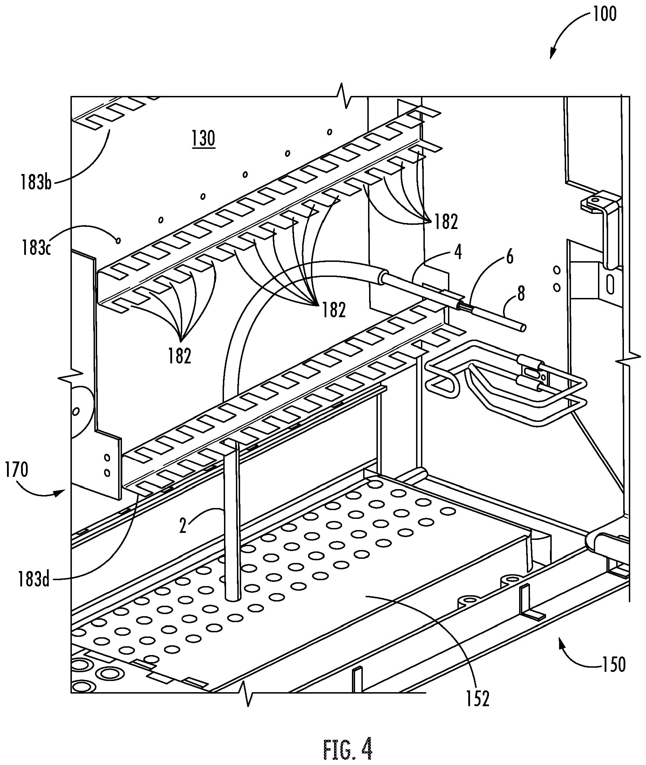

FIG. 3 is an enlarged perspective view of the strain relief assembly 170, illustrating an exemplary duct installation method. The method, includes the steps of routing a duct 2 through the base plate 152 at the bottom of the cabinet and positioning the duct 2 behind a first alignment element pair 183d, positioning the duct 2 in grooves 182 of a second alignment element pair 183c; and pushing the duct 2 into the grooves 182 such that an incision/cut is made in the duct 2, providing strain relief. FIG. 4 further illustrates an exemplary duct unmounting method, showing the duct 2 after unmounting from a strain relieving groove 182 and bending of the duct 2 in preparation for blowing the cable 4 inside of the duct 2.

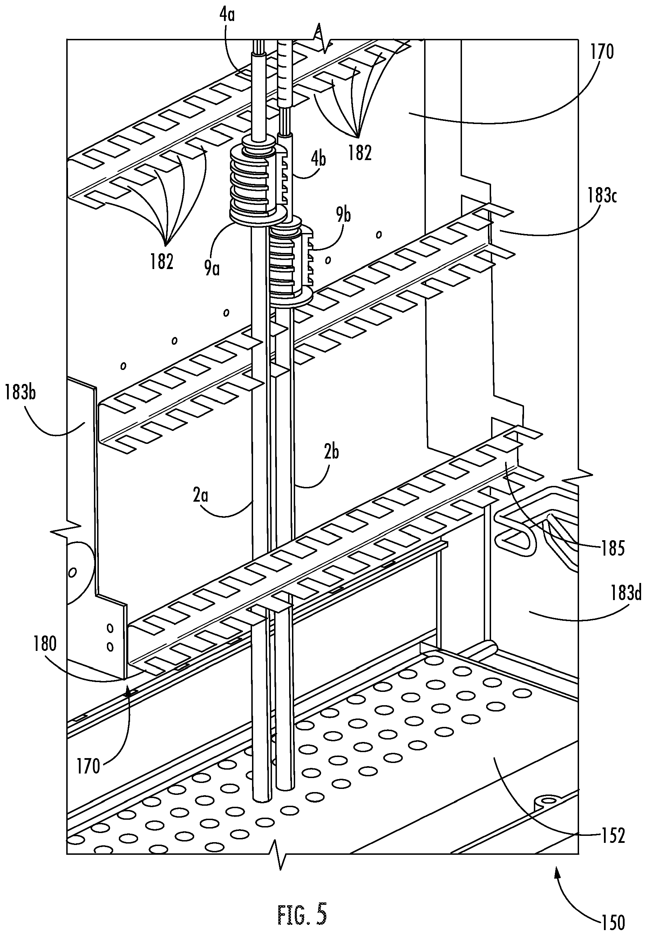

FIG. 5 shows the strain relief assembly 170 with ducts 2a, 2b, cables 4a, 4b blown inside of the ducts 2a, 2b, and gasstops 9a, 9b coupled to the cables 4a, 4b and the ducts 2a, 2b. This configuration is particularly space efficient and provides for the use of large gasstops positioned vertically at different levels in a side-by-side configuration. This staggered vertical positioning of the gasstops 9a, 9b avoids problems typically associated with gasstop installation and positioning, which occurs when gasstops are installed at one level, i.e. end at the same height of duct.

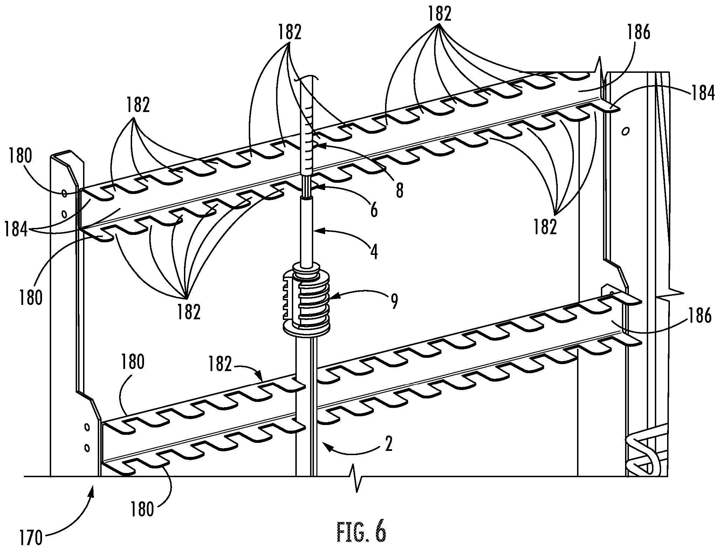

FIG. 6 shows an enlarged view of the strain relief alignment assembly 170, a duct 2 installed in strain relief element 180 with cable 4 blown in, and a gasstop 9 coupled to the duct 2 and the cable 4. This schematic also shows the transition of a buffer tube 6 from the cable 4 to a transition tube 8.

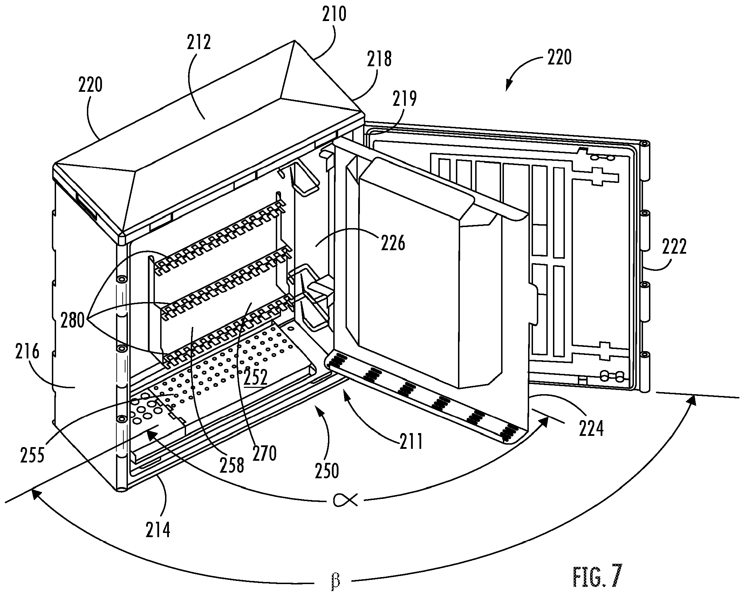

FIG. 7 is a perspective view of a second embodiment of a cabinet 200, including an outer cabinet body 210 and an inner cabinet body 211. The outer cabinet body 201 has a top 212, which is preferably removable, a bottom wall 214, a first side wall 216, a second side wall 218, and a rear wall 220. This embodiment of the cabinet also includes an exterior door 222 and an internal door 224, with a plurality of connection elements (e.g. screws and rivets) and a duct-cable management system 250 defined in a cavity 258 of the cabinet, including a strain relief assembly 270.

The cabinet 200 includes components similar to those shown in the first cabinet embodiment and include, but are not limited to a base plate 252, a plurality of apertures 254, preferably in a matrix pattern 255, upper cable/tube guides and side cable/tube guides. The components included in the strain relieving assembly 270 are also similar to those described with respect to the first cabinet embodiment and include, but are not limited to alignment elements 280, grooves 282, alignment extensions 284, and end plates 286.

Still referring to FIG. 7, the internal door 224 is configured to open to a maximum angle α ranging from about 100° to about 115° with respect to an outermost surface of the outer cabinet body. Similarly, the exterior door 222 is similarly configured to open to a maximum angle β ranging from about 100° to about 130°. In contrast, current solutions typically provide about a 90° opening angle for internal and external doors.

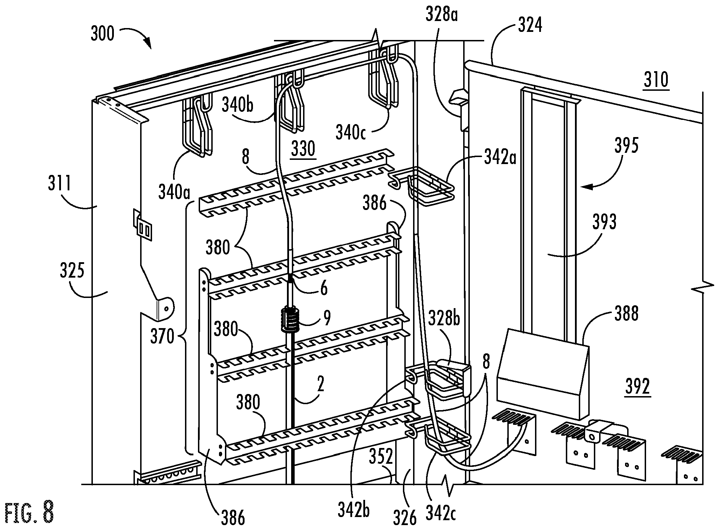

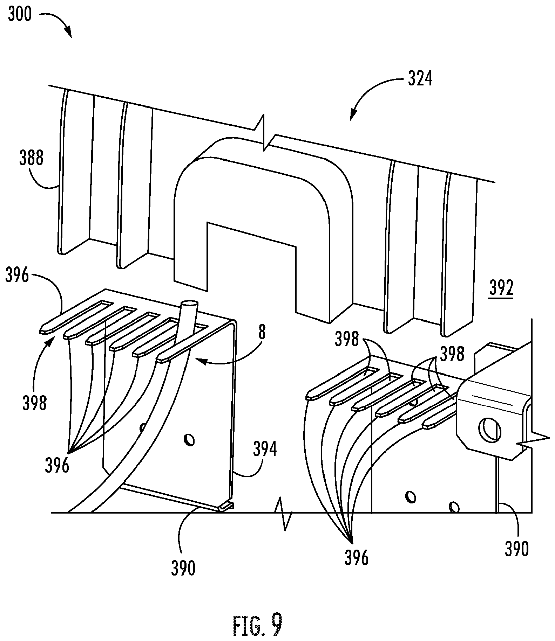

FIGs. 8 and 9, show a partial view of another embodiment of a cabinet 300 with an outer cabinet body 310 and an inner cabinet body 311. The inner cabinet body 311 includes an internal splicing door 324, a first internal sidewall 325, a second internal sidewall 326, first and second internal hinges 328a, 328b, a back internal wall 330, and a bottom internal wall 132. Coupled to the inner cabinet body 311 are a duct-cable management system 350, including a base plate 352 and a strain relieving assembly 370. The components included in the strain relieving assembly are similar to those described with respect to the first two cabinet embodiments and include, but are not limited to alignment elements 380, grooves 382, alignment extensions 384, and end plates 386.

This cabinet embodiment also has an internal splicing door 324. The internal splicing door 324 includes a plurality of splicing trays 388 coupled to an inner door surface 392. This means that after opening the internal door 324, an operator can perform all operations (including installing ducts, blowing the cables inside of them, transitioning buffer tubes into the splicing area through the hinge, securing them in place and splicing the fiber) without opening or closing the internal door 224. In known solutions this is not the case, since the splicing area is typically placed at the other side of the internal door and requires operator to open and close door during operation.

The cabinet 300 preferably includes at least one column 393, but preferably two columns, with each column being configured to accommodate about 72 splice trays, using a pair of tray mounts 395. The cabinet 300 may also be configured to accommodate three columns, allowing for installation of about 216 splice trays and more cables inside one cabinet. These configurations are achievable even though the cabinet 300 has a generally fixed external shape and dimensions.

FIG. 8 also shows the routing of a transition tube 8 within the cabinet 300. Here, the transition tube is routed though a strain relief assembly 370 to tube guides 340b, 340c, 342a, 342b, 342c, and then to tube mount 390. Accordingly, the internal door 324 includes a plurality of tube mounts 390 coupled to an inner door surface 392. Each tube mount 390 includes a mounting plate 394 and tube holding extensions 396 with grooves 398 therebetween. The tube mounts 390 are thus configured to hold a plurality of tubes in position before installation into a splice tray 388.

It will be apparent to those skilled in the art that various modifications and variations can be made to the embodiment disclosed herein without departing from the scope of the disclosure. Other embodiments of the present disclosure will be apparent to those skilled in the art from consideration of the specification and practice of the present disclosure. It is intended that the specification and examples be considered as exemplary only, with a true scope of the present disclosure being indicated by the following claims.

## Claims

1. A cabinet (100) for fiber optic cable management, comprising:
an outer cabinet body (110);
an inner cabinet body (111) disposed at least partially within the outer cabinet body (110); and
a duct-cable management system (150) defined in a cavity (158) of the cabinet (100);
**characterised by** the duct-cable management system (150) including a strain relief assembly (170) having at least two pairs of alignment elements (180), an alignment wall (185) extending horizontally between each pair of alignment elements (180), wherein the alignment wall (185) couples the respective alignment element pair,
wherein each alignment element (180) has a plurality of strain relieving grooves (182), and
wherein at least one strain relieving groove (182) is configured to cut into a duct (2) and provide strain relief when the duct (2) is pushed into the at least one strain relieving groove (182).

2. The cabinet (100) of claim 1, wherein the duct-cable management system (150) further comprises a base plate (152) positioned below the strain relief assembly (170).

3. The cabinet (100) of claim 2, wherein the base plate (152) comprises a plurality of apertures (154).

4. The cabinet (100) of claim 3, wherein the plurality of apertures (154) is configured in a matrix pattern.

5. The cabinet (100) of either claim 3 or 4, wherein the plurality of apertures (154) comprises at least 60 apertures.

6. The cabinet (100) of any one of claims 1 to 5, wherein the inner cabinet body (111) comprises a first internal sidewall (125), a second internal sidewall (126) opposite the first internal sidewall (125), and a back internal wall (130) coupling the first internal sidewall (125) and the second internal sidewall (126).

7. The cabinet (100) of any one of claims 1 to 6, further comprising upper cable/tube guides coupled to the inner cabinet body (111).

8. The cabinet (100) of any one of claims 1 to 7, further comprising side cable/tube guides coupled to the inner cabinet body (111).

9. The cabinet (100) of any one of claims 1 to 8, wherein the strain relief assembly (170) further comprises at least two end plates (186) positioned a distance away from ends of each of the alignment elements (180).

10. The cabinet (100) of any one of claims 1 to 8, wherein the strain relief assembly (170) further comprises two end plates (186) that extend outwardly in a staggered pattern.

11. The cabinet (100) of any one of claims 1 to 10, wherein the inner cabinet body (111) comprises an internal door (224).

12. The cabinet (100) of any one of claims 1 to 11, wherein each of the strain relieving grooves (182) is disposed between a pair of alignment extensions (184).

13. The cabinet (300) of any one of claims 1 to 5, wherein the inner cabinet body (311) further comprises a sidewall (326) and an internal splicing door (324) coupled to the sidewall (326).

14. The cabinet (300) of claim 13, wherein the internal splicing door (324) comprises a plurality of tube mounts (390) coupled to an inner door surface (392) of the internal splicing door (324).

15. The cabinet (300) of claim 14, wherein each of the tube mounts (390) comprises a mounting plate (394) and tube holding extensions (396) having grooves (398) there between

## Patentansprüche

1. Schrank (100) zur Glasfaserkabelverwaltung, umfassend:
einen äußeren Schrankkörper (110);
einen inneren Schrankkörper (111), der mindestens teilweise innerhalb des äußeren Schrankkörpers (110) angeordnet ist; und
ein Kanal-Kabel-Verwaltungssystem (150), das in einem Hohlraum (158) des Schranks (100) definiert ist;
**dadurch gekennzeichnet, dass** das Kanal-Kabel-Verwaltungssystem (150) eine Zugentlastungsbaugruppe (170) mit mindestens zwei Paaren von Ausrichtungselementen (180) beinhaltet,
wobei sich eine Ausrichtungswand (185) horizontal zwischen jedem Paar von Ausrichtungselementen (180) erstreckt,
wobei die Ausrichtungswand (185) das jeweilige Ausrichtungselementpaar koppelt,
wobei jedes Ausrichtungselement (180) eine Vielzahl von Zugentlastungsnuten (182) aufweist und
wobei mindestens eine Zugentlastungsnut (182) dazu konfiguriert ist, in einen Kanal (2) zu schneiden und eine Zugentlastung bereitzustellen, wenn der Kanal (2) in die mindestens eine Zugentlastungsnut (182) gedrückt wird.

2. Schrank (100) nach Anspruch 1, wobei das Kanal-Kabel-Verwaltungssystem (150) ferner eine Grundplatte (152) umfasst, die unter der Zugentlastungsbaugruppe (170) positioniert ist.

3. Schrank (100) nach Anspruch 2, wobei die Grundplatte (152) eine Vielzahl von Öffnungen (154) umfasst.

4. Schrank (100) nach Anspruch 3, wobei die Vielzahl von Öffnungen (154) in einem Matrixmuster konfiguriert ist.

5. Schrank (100) nach Anspruch 3 oder 4, wobei die Vielzahl von Öffnungen (154) mindestens 60 Öffnungen umfasst.

6. Schrank (100) nach einem der Ansprüche 1 bis 5, wobei der innere Schrankkörper (111) eine erste innere Seitenwand (125), eine zweite innere Seitenwand (126) gegenüber der ersten inneren Seitenwand (125) und eine hintere innere Wand (130) umfasst, welche die erste innere Seitenwand (125) und die zweite innere Seitenwand (126) koppelt.

7. Schrank (100) nach einem der Ansprüche 1 bis 6, ferner umfassend obere Kabel- /Rohrführungen, die an den inneren Schrankkörper (111) gekoppelt sind.

8. Schrank (100) nach einem der Ansprüche 1 bis 7, ferner umfassend seitliche Kabel- /Rohrführungen, die an den inneren Schrankkörper (111) gekoppelt sind.

9. Schrank (100) nach einem der Ansprüche 1 bis 8, wobei die Zugentlastungsbaugruppe (170) ferner mindestens zwei Endplatten (186) umfasst, die in einem Abstand von den Enden jedes der Ausrichtungselemente (180) weg positioniert sind.

10. Schrank (100) nach einem der Ansprüche 1 bis 8, wobei die Zugentlastungsbaugruppe (170) ferner zwei Endplatten (186) umfasst, die sich in einem versetzten Muster nach außen erstrecken.

11. Schrank (100) nach einem der Ansprüche 1 bis 10, wobei der innere Schrankkörper (111) eine Innentür (224) umfasst.

12. Schrank (100) nach einem der Ansprüche 1 bis 11, wobei jede der Zugentlastungsnuten (182) zwischen einem Paar von Ausrichtungsverlängerungen (184) angeordnet ist.

13. Schrank (300) nach einem der Ansprüche 1 bis 5, wobei der innere Schrankkörper (311) ferner eine Seitenwand (326) und eine Spleißinnentür (324) umfasst, die an die Seitenwand (326) gekoppelt ist.

14. Schrank (300) nach Anspruch 13, wobei die Spleißinnentür (324) eine Vielzahl von Rohrhalterungen (390) umfasst, die an eine inneren Türoberfläche (392) der Spleißinnentür (324) gekoppelt ist.

15. Schrank (300) nach Anspruch 14, wobei jede der Rohrhalterungen (390) eine Montageplatte (394) und Rohrhalteverlängerungen (396) mit dazwischenliegenden Nuten (398) umfasst.

## Revendications

1. Armoire (100) pour la gestion de câbles à fibres optiques, comprenant :
un corps d'armoire extérieur (110) ;
un corps d'armoire intérieur (111) disposé au moins partiellement à l'intérieur du corps d'armoire extérieur (110) ;
et
un système de gestion de conduites-câbles (150) défini dans une cavité (158) de l'armoire (100) ;
**caractérisée par** le système de gestion de conduites-câbles (150) comprenant un ensemble anti-traction (170) comportant au moins deux paires d'éléments d'alignement (180), une paroi d'alignement (185) s'étendant horizontalement entre chaque paire d'éléments d'alignement (180), dans laquelle la paroi d'alignement (185) couple la paire d'éléments d'alignement respective,
dans laquelle chaque élément d'alignement (180) comporte une pluralité de rainures anti-traction (182), et
dans laquelle au moins une rainure anti-traction (182) est configurée pour se couper dans une conduite (2) et
apporter une protection anti-traction lorsque la conduite (2) est poussée dans l'au moins une rainure anti-traction (182).

2. Armoire (100) selon la revendication 1, dans laquelle le système de gestion de conduites-câbles (150) comprend en outre une plaque de base (152) positionnée au-dessous de l'ensemble anti-traction (170).

3. Armoire (100) selon la revendication 2, dans laquelle la plaque de base (152) comprend une pluralité d'ouvertures (154).

4. Armoire (100) selon la revendication 3, dans laquelle la pluralité d'ouvertures (154) sont configurée dans un motif de réseau.

5. Armoire (100) selon la revendication 3 ou 4, dans laquelle la pluralité d'ouvertures (154) comprend au moins 60 ouvertures.

6. Armoire (100) selon l'une quelconque des revendications 1 à 5, dans laquelle le corps d'armoire intérieur (111) comprend une première paroi latérale interne (125), une seconde paroi latérale interne (126) opposée à la première paroi latérale interne (125), et une paroi interne arrière (130) couplant la première paroi latérale interne (125) et la seconde paroi latérale interne (126).

7. Armoire (100) selon l'une quelconque des revendications 1 à 6, comprenant en outre des guides de câbles/tubes supérieurs couplés au corps d'armoire intérieur (111).

8. Armoire (100) selon l'une quelconque des revendications 1 à 7, comprenant en outre des guides latéraux de câbles/tubes couplés au corps d'armoire intérieur (111).

9. Armoire (100) selon l'une quelconque des revendications 1 à 8, dans laquelle l'ensemble anti-traction (170) comprend en outre au moins deux plaques d'extrémité (186) positionnées à distance des extrémités de chacun des éléments d'alignement (180).

10. Armoire (100) selon l'une quelconque des revendications 1 à 8, dans laquelle l'ensemble anti-traction (170) comprend en outre deux plaques d'extrémité (186) qui s'étendent vers l'extérieur selon un motif en quinconce.

11. Armoire (100) selon l'une quelconque des revendications 1 à 10, dans laquelle le corps d'armoire intérieur (111) comprend une porte interne (224).

12. Armoire (100) selon l'une quelconque des revendications 1 à 11, dans laquelle chacune des rainures anti-traction (182) est disposée entre une paire d'extensions d'alignement (184).

13. Armoire (300) selon l'une quelconque des revendications 1 à 5, dans laquelle le corps d'armoire intérieur (311) comprend en outre une paroi latérale (326) et une porte d'épissure interne (324) couplée à la paroi latérale (326).

14. Armoire (300) selon la revendication 13, dans laquelle la porte d'épissure interne (324) comprend une pluralité de supports de tube (390) couplés à une surface de porte intérieure (392) de la porte d'épissure interne (324).

15. Armoire (300) selon la revendication 14, dans laquelle chacun des supports de tube (390) comprend une plaque de montage (394) et des extensions de maintien de tube (396) comportant des rainures (398) entre elles.
